# EUROPÄISCHE PATENTSCHRIFT

(11) **EP 4 202 378 B1**
(45) Veröffentlichungstag und Bekanntmachung des Hinweises auf die Patenterteilung: **21.01.2026**
(21) Anmeldenummer: 22215251.4
(22) Anmeldetag: 21.12.2022
(51) Int. Cl.: G01F 1/46, G01F 1/34

(54) **MESSVORRICHTUNG ZUR DURCHFLUSSBESTIMMUNG EINES STRÖMENDEN MEDIUMS DURCH EINEN KANAL**
MEASURING DEVICE FOR DETERMINING THE FLOW RATE OF A FLOWING MEDIUM THROUGH A CHANNEL
DISPOSITIF DE MESURE POUR LA DÉTERMINATION DU DÉBIT D'UN FLUIDE S'ÉCOULANT À TRAVERS UN CANAL

(30) Priorität: 21.12.2021 DE 102021134084; 23.03.2022 DE 102022106801
(43) Veröffentlichungstag der Anmeldung: 28.06.2023
(73) Patentinhaber: Schako KG, 78600 Kolbingen (DE)
(72) Erfinder: VÖGELI, Beat, 8248 Uhwiesen (CH)
(74) Vertreter: Patentanwälte und Rechtsanwalt Weiß, Arat & Partner mbB

(56) Entgegenhaltungen:
- DE-A1- 4 118 404
- US-A- 4 453 419
- US-A- 4 481 829

## Beschreibung

Die Erfindung betrifft eine Messvorrichtung zur Durchflussbestimmung eines strömenden Mediums durch einen Kanal gemäss dem Oberbegriff von Anspruch 1

### Stand der Technik

In vielen industriellen Bereichen werden Durchflussmessvorrichtungen für strömende Medien eingesetzt. Bei diesen Medien handelt es sich im Wesentlichen um fliessende Medien, d.h., Dämpfe, Gas oder auch Flüssigkeiten. Die vorliegende Erfindung bezieht sich nicht auf die Messung des Fliessverhaltens von Feststoffen.

Als Messvorrichtungen können beispielsweise entsprechend ausgestaltete Düsen, Wirbeldurchflussmesser aber insbesondere auch Staudrucksonden verwendet werden. Gerade letztere werden bevorzugt, da sie nur geringe bleibende Druckverluste im strömenden Medium verursachen.

Bekannte Staudrucksonden weisen in der Regel zwei sogenannte Wirkdruckkanäle auf, die mit Wirkdrucköffnungen in Anströmrichtung und in Abströmrichtung versehen sind. Zwischen den beiden Wirkdruckkanälen entsteht beim Eintauchen der Sonde in ein strömendes Medium ein Differenzdruck. Aus diesem kann auf die Strömungsgeschwindigkeit des an der Staudrucksonde vorbei fliessenden Mediums zurückgeschlossen werden, wenn der Widerstandsbeiwert der Staudrucksonde bekannt ist.

Eine entsprechende Staudrucksonde wird insbesondere in der DE 195 09 208 A1 beschrieben. Dabei wird eine Rohrleitung mit zwei Kanälen gezeigt, die durch eine Trennwand separiert werden. Wesentlich dabei ist, dass die Staudrucksonde mit in Strömungsrichtung seitlich herausstehenden Stegen mit im Wesentlichen linienförmigen Abrisskanten für das Strömungsmedium versehen ist.

Aus der US 4 453 419 A ist ein Sensor in einer Klimaanlage gezeigt. Entsprechende Luftaufnahmeöffnungen sind in einem Kreuz von Messaufnehmereinheiten angeordnet, die mittig über einen Knoten miteinander verbunden sind, aus welchem die frontseitig und getrennt davon rückseitig aufgenommenen Luftvolumina zu entsprechenden Messgeräten abgeführt werden.

Die US 4 481 829 A zeigt eine Mehrzahl von Messkreuzen in einem Luftkanal, die ebenfalls miteinander über einen Knoten verbunden sind, aus dem die entsprechenden unterschiedlichen Druckvolumina abgeführt werden.

Aus der DE 41 18 404 A1 ist ein medizinisches elektronisches Gerät für die Beurteilung pneumokardialer Vorgänge während Belastung und für die Abschätzung der pneumokardialen Funktion während statischer Prüfung bekannt. Dabei befindet sich ein paar hohler rohrförmiger Rippen in einem rohrförmigen Mundstück, die einander in ihren Mittelpunkten unter Ausbildung eines Kreuzes durchsetzen. Im Querschnitt weist jede der Rippen ein Paar von Hohlräumen auf, die voneinander getrennt sind. Während die Hohlräume der Rippen voneinander isoliert sind, stehen sie einzeln in Fluidkommunikation mit zwei Hohlräumen von einer anderen Rippe. Bei Benutzung wird ein Paar hohler Nadelsonden durch Membranen eingeführt und in die getrennten Hohlräume der Rippe. Die hohlen Nadelsonden werden dann durch entsprechende Rohrleitungen mit Druckwandlern gekoppelt.

### Aufgabe

Aufgabe der vorliegenden Erfindung ist es, eine derartige Messeinrichtung mit Staudrucksonde wesentlich zu verbessern und auch für die Messung von strömenden Medien mit sehr geringer Geschwindigkeit nutzbar zu machen.

### Lösung der Aufgabe

Zur Lösung der Aufgabe führen die Merkmale des kennzeichnenden Teils von Anspruch 1.

Gemäss der vorliegenden Erfindung soll ein möglichst grosses Differenzdrucksignal bzw. ein ausreichendes Drucksignal bereits bei sehr kleinen Strömungsgeschwindigkeiten (0,7 m/s) erzielt werden. Gerade dies wird durch den symmetrischen Aufbau des Messkreuzes bzw. Messaufnehmers ermöglicht. Bei nur einem balkenförmigen Messaufnehmer kann es vorkommen, dass die Luftströmung, beispielsweise nach einem Bogen des Luftkanals, an den balkenförmigen Messaufnehmer vorbeigeführt wird, sodass es zu keiner Messung kommt. Diese Gefahr besteht bei einem Messkreuz nicht. Bei einem Messkreuz trifft die Luftströmung immer zumindest auf eine Messwerteinheit, meist sogar auf zwei Messwerteinheiten, was die Genauigkeit nochmals wesentlich verbessert.

Entscheidender Vorteil der vorliegenden Erfindung ist auch, dass der Messbereich des Volumenstromreglers insbesondere in Richtung geringerer Luftgeschwindigkeiten erweitert wird. Der Differenzdruck zwischen den beiden Wirkdruckkanälen ist selbst bei geringen Luftgeschwindigkeiten (ca. 0,7 m/s) gross genug, um in diesem Geschwindigkeitsbereich eine Regelfähigkeit sicherzustellen. Der hohe Differenzdruck selbst bei kleinen Luftgeschwindigkeiten lässt sich physikalisch damit erklären, dass die Luftgeschwindigkeit an der Ablösekante ca. dreimal höher ist als die mittlere Geschwindigkeit im Kanal ist.

Neben einem hohen Differenzdruck werden unter Verwendung des gewählten Profils des Messwertaufnehmers die Messunsicherheiten bei niedrigen Strömungsgeschwindigkeiten verringert. Über den gesamten Messbereich hinweg sind die Messwerte stabil. Grund dafür ist die eingangs erwähnte Tatsache, dass der Strömungsabriss in einem grossen Geschwindigkeitsbereich stets an der gleichen Stelle erfolgt.

Labormessungen haben die Lageunabhängigkeit des Reglers bestätigt. Es konnte die Erkenntnis gewonnen werden, dass das neue Messsystem selbst bei gestörter Luftströmung, die z. B. unmittelbar nach Formstücken (90° Bogen, T-Stück) vorliegt, eine hohe Messgenauigkeit aufweist.

In der unmittelbaren Nähe des Messaufnehmers befindet sich eine dünne Schicht, die sogenannte Grenzschicht. In dieser Schicht können zwei Strömungsformen auftreten, die Strömung in der Grenzschicht kann nämlich turbulent oder laminar sein. Der laminar-turbulente Übergang der Grenzschichtströmung (=Grenzschichtablösung, bei der die Strömung der Geometriekontur nicht mehr folgen kann) ist abhängig von der Reynoldszahl bzw. von der Luftgeschwindigkeit.

Diese Grenzschichtablösung des Mediums von der Strömungsmesssonde hat stets Wirbelbildungen und hohe Energieverlust zur Folge und führt zu einem so genannten Totwassergebiet mit Rückströmung. Die Luftströmung löst sich unabhängig von der Strömungsgeschwindigkeit im Seitenbereich des umströmten Profils stets an der sogenannten Abrisskante. Dies führt dazu, dass der gemessene C-Wert (die geometrische Konstante der Messeinheit), welcher den Durchflussmesswert entscheidend beeinflusst, über einen weiten Geschwindigkeitsbereich einen nahezu konstanten Wert annimmt. Dadurch wird eine genauere Messung der Luftgeschwindigkeit bzw. des Volumenstromes ermöglicht, was eine hohe Prozesstauglichkeit sicherstellt.

Je nach Messwertaufnehmergeometrie und Luftgeschwindigkeit ist der Ort der Abrisskante immer unterschiedlich, d.h. die Abrisskante wandert. Durch die geometrische Anpassung der Messwertaufnehmergeometrie (insbesondere des Radius) kann direkt Einfluss auf das Totwassergebiet hinter dem Profil genommen werden.

Der Differenzdruck zwischen den beiden Wirkdruckkanälen bzw. der dynamische Druck P_dyn ergibt sich aus dem gesamten Staudruck P_gesamt und dem statischen Druck hinter dem Profil P_statisch. Aus P_dyn lässt sich dann die Luftgeschwindigkeit v ableiten.

Mit dem Radius soll die Abrisskante und damit auch der Totwasserbereich hinter dem Profil beeinflusst werden, d.h. der Radius wird so festgelegt und die Strömungsablösung derart beeinflusst, dass die Rückströmung hinter dem Profil möglichst klein wird. Denn durch die Rückströmung steigt der statische Druck p_statisch und somit verringert sich der dynamische Druck p_dyn.

Der Grund ist, dass aufgrund der speziell gekrümmten Kontur der Seitenkante des Profils des Messaufnehmers die Strömung der Kontur in einem grossen Geschwindigkeitsbereich stets bis zur Abrisskante folgen kann und die Strömung davor nicht abreisst.

Die Vorteile der vorliegenden Erfindung beginnen aber bereits beim Anströmen des Mediums. Eine Schräganströmung +/- 10° auf das Profil führt praktisch zu keiner Veränderung in der erzielten Genauigkeit. Diese positive Eigenschaft macht sich besonders für den Einsatz des Profils nach Formstücken (90° Bogen, T-Stück etc.) interessant. Durch die speziell gekrümmte, strömungsoptimale Profilform wird erreicht, dass eine weiche Anströmung ermöglicht wird, was hinsichtlich Schall (Strömungsgeräusche) und Druckverlust besondere Vorteile mit sich bringt. Durch den geringen Druckverlust können Energiekosten gespart werden.

Durch die strömungsoptimierte Bauform beschleunigt sich die Strömung zur Abrisskante hin um ca. das 3-fache. Diese Beschleunigung der Strömung im profilnahen Bereich hat eine Differenzdruckerhöhung zur Folge.

Bei einem Volumenstromregler bietet die neue Messvorrichtung neben dem herkömmlichen Prinzip der Differenzdruckmessung auch die Möglichkeit der Wirkdruckmessung im Bereich unmittelbar vor und nach dem Klappenblatt (Stichwort: Kennfeldregelung), an dem die Luft eine je nach Klappenstellung unterschiedlich starke Beschleunigung erfährt.

Durch die Tatsache, dass bei kleinen Nennweiten eines Kanals und der runden Ausführung die Anzahl der Messachse auf 1 reduziert werden kann, können sowohl Montagekosten als auch Materialkosten eingespart werden. Das neu entwickelte Messkreuz enthält nur noch neun Einzelteile. Falls nur eine Messachse erforderlich ist, reduziert sich die Anzahl der Einzelteile auf nur noch drei Teile. Dies führt zu Einsparungen an Materialkosten, reduzierten Montagezeiten und Reduzierung von Werkzeug- & Instandhaltungskosten beim Lieferanten.

Durch die spezielle konstruktive Ausführung der Kunststoff- und/oder Aluminiumteile wird erreicht, dass im Vergleich zu anderen Messelementen eine erhöhte Kraftaufwendung erforderlich ist, um die Teile voneinander zu lösen. Das neue Messelement weist durch die spezielle Konstruktion eine hohe Stabilität auf.

Der gesamte geometrische Aufbau des Messaufnehmers ist verbessert. Durch den spiegelsymmetrischen Aufbau zu einer entlang der Abrisskanten laufenden Ebene ist der Messaufnehmer sowohl bei einer Strömungsrichtung in der einen als auch in der entgegengesetzten Richtung einsetzbar. Der symmetrische Aufbau ist somit für die Montage in einen Volumenstromregler vorteilhaft, wo beim Einbau des Messaufnehmers in den Regler weniger Fehler (durch Falscheinbau) entstehen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur** 1 eine perspektivische Ansicht einer erfindungsgemässen Messeinrichtung in Zusammenbaulage;
**Figur** 2 eine perspektivische Ansicht der Messeinrichtung gemäss Figur 1 in Explosionsdarstellung;
**Figur** 3 einen Querschnitt durch einen erfindungsgemässen Messwertaufnehmer;
**Figur 4** schematische Darstellungen von unterschiedlichen Anströmungen eines Messaufnehmers.

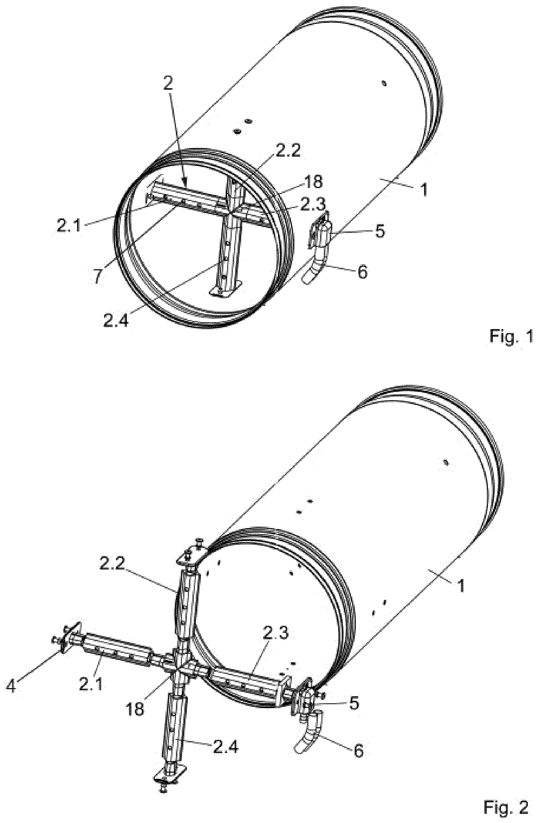

Gemäss den Figuren 1 und 2 wird in einen Kanal 1 ein Messaufnehmer 2 einer Messeinrichtung für die Geschwindigkeit eines in dem Kanal strömenden Mediums eingesetzt. Befestigt wird der Messaufnehmer 2 mittels einer Kunststoffabdeckungen 4 und einem Druckentnahmeteil 5, welches über entsprechende Druckleitungen 6 mit einer nicht gezeigten Messeinheit verbunden ist.

In Figur 1 ist in Zusammenbaulage erkennbar, dass der Messaufnehmer 2 den Kanal 1 entlang seines gesamten Durchmessers durchzieht und entsprechende Anströmöffnungen 7 dem strömenden Medium ausgesetzt sind.

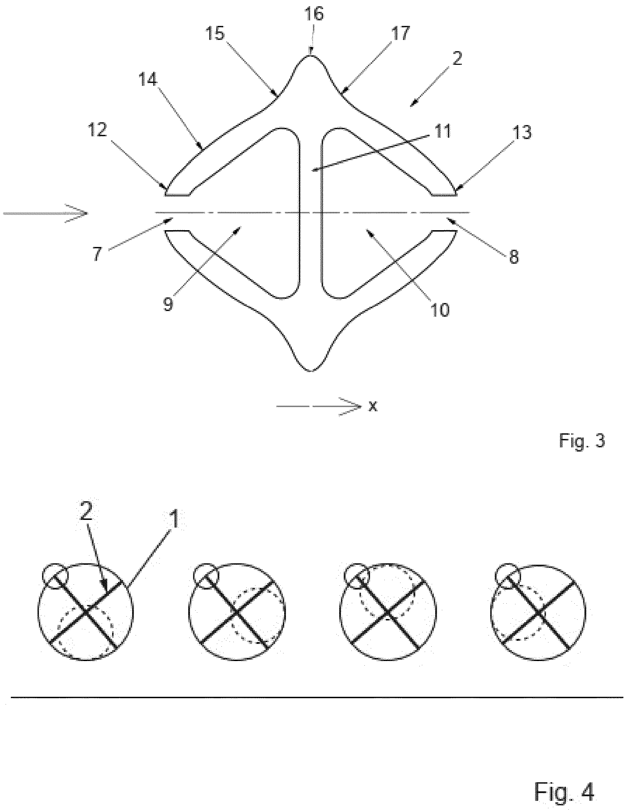

Gemäss Figur 3 liegen diesen Anströmöffnungen 7 in dem Messaufnehmer 2 Abströmöffnungen 8 gegenüber, welche in Strömungsrichtung X geöffnet sind. Anströmende Luft, die in die Anströmöffnungen 7 eintritt, wird durch einen ersten Wirkdruckkanal 9 über das Druckentnahmeteil 5 und die Druckleitung 6 der Messeinheit zugeführt. Desgleichen wird die über die Abströmöffnungen 8 eintretende Luft über einen weiteren Wirkdruckkanal 10 und ebenfalls über das Druckentnahmeteil 5 zur Druckleitung 6 der Messeinheit zugeführt, wobei beide Kanäle 9 und 10 durch eine Scheidewand 11 voneinander getrennt sind. Ebenso erfolgt die Zuführung zur Messeinheit ebenfalls getrennt.

Ein wesentlicher Punkt ist die Querschnittsgeometrie des Messaufnehmers 2 bzw. seiner einzelnen Messwertaufnehmer 2.1-2.4. Diese wird auch unter Zuhilfenahme der Figur 3 näher beschrieben. Eine Anströmfläche 12, welche die Anströmöffnungen 7 aufweist, und eine Abströmfläche 13, in welche die Abströmöffnungen 8 eingeformt sind, sind gerundet ausgestaltet, so dass eine geringförmige Schrägstellung des Messaufnehmers 2 im Bereich von +/- 10 Grad zu keiner Veränderung in der erzielten Messgenauigkeit führt. Dies ist vor allem vorteilhaft beim Einsatz des Messaufnehmers 2 nach Formstücken, wie beispielsweise einem Bogen im Kanal. Hier ist meist das Anströmen des Messaufnehmers 2 nicht geradlinig, sondern in beschränktem Umfang schräg.

Im Anschluss an die Anströmfläche 12 folgt eine Bogenkrümmung 14, die in eine S-förmige Krümmung 15 übergeht. Das Ende dieser S-förmigen Krümmung 15 bildet eine scheitelförmige Abrisskante 16 mit einem vorbestimmten optimierten Radius.

Das bedeutet, dass durch die Bogenkrümmung 14 eine sanfte Aufteilung des strömenden Mediums erfolgt, die zu wesentlich geringeren Druckverlusten als bei bekannten Sonden führt. Im Bereich der S-förmigen Krümmung 15 wird allerdings das Medium beschleunigt, was auf einen Bernoulli-Effekt zurückzuführen ist. Diese Beschleunigung bewirkt im Zusammenspiel mit einem auf die Abrisskante 16 nachfolgenden einem S entgegengesetzt gekrümmten (spiegelbildlichen zu S) Abstieg 17 dazu, dass das Medium an der Abrisskante 16 sich von der Sonde 2 löst und danach in eine turbulente Strömung übergeht, die sich erst weit nach der Sonde 2 mit dem übrigen Medium, welches die gegenüberliegende Abrisskante umströmen muss, vereinigt.

Gemäss der vorliegenden Erfindung wurde aber herausgefunden, dass bei einer radialen, scheitelförmigen Ausgestaltung der Abrisskante 16 mit einem Radius von 0,5 das auf die beiden sich gegenüberliegenden Abrisskanten folgende sogenannte "Totwassergebiet" sehr gering gehalten wird. In diesem Totwassergebiet ist die turbulente Strömung auf ein Minimum reduziert, so dass auch nur eine sehr geringe Rückströmung von Luft durch die Abströmöffnung 8 in den Wirkdruckkanal 10 erfolgt. Das bedeutet, dass ein Druckunterschied ΔP zwischen der anströmenden Luft in dem Wirkdruckkanal 9 und der abströmenden Luft in dem Wirkdruckkanal 10 maximiert ist. Nach der Formel V = C • √ΔP durch P bestimmt dieses ΔP wesentlich den Volumenstrom V (C = geometrische Konstante, sogenannter C-Faktor); P = Luftdichte [kg/m³].

Zu einer genaueren Erfassung der Strömung ist nun erfindungsgemäss vorgesehen, dass die Messwertaufnehmer 2.1-2.4 durch einen Verbindungsknoten 18 zu einem Messkreuz miteinander verbunden werden, wobei nur an einem Messwertaufnehmer 2.4 das Druckentnahmeteil 5 vorgesehen ist. Dabei sind natürlich die entsprechenden Wirkdruckkanäle 9 bzw. 10 über diesen Verbindungsknoten 18 miteinander verbunden. Sie sind dann jeweils gemeinsam an das Druckentnahmeteil 5 angeschlossen.

Insbesondere in Figur 4 ist erkennbar, wie sich der erfindungsgemässe Messwertaufnehmer auf die Erfassung der Werte einer Strömung auswirkt. In sämtlichen vier Himmelsrichtungen wird die Strömung von mindestens zwei Messwertaufnehmern erfasst, was in der Praxis zu wesentlich mehr und genaueren Messwerten führt. So wurde im Labor festgestellt, dass der Istwert der Geschwindigkeit gemessen in m/s von dem entsprechenden Sollwert um weniger als 10 % abweicht, und dies bei einer Vielzahl von unterschiedlichen Drücken, gemessen in Pascal.

### Bezugszeichenliste

| | | | | | |
|---|---|---|---|---|---|
| 1 | Kanal | 34 | | 67 | |
| 2 | Messaufnehmer | 35 | | 68 | |
| 2.1-2.4 | Messwerteinheit | | | | |
| 3 | Dichtung | 36 | | 69 | |
| 4 | Kunststoffabdeckung | 37 | | 70 | |
| 5 | Druckentnahmeteil | 38 | | 71 | |
| 6 | Druckleitung | 39 | | 72 | |
| 7 | Anströmöffnung | 40 | | 73 | |
| 8 | Abströmöffnung | 41 | | 74 | |
| 9 | Wirkdruckkanal | 42 | | 75 | |
| 10 | Wirkdruckkanal | 43 | | 76 | |
| 11 | Scheidewand | 44 | | 77 | |
| 12 | Anströmfläche | 45 | | 78 | |
| 13 | Abströmfläche | 46 | | 79 | |
| 14 | Krümmung | 47 | | | |
| 15 | S-förmige Krümmung | 48 | | | |
| 16 | Abrisskante | 49 | | | |
| 17 | Abstieg | 50 | | | |
| 18 | Knoten | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |
| | | | | | |

## Patentansprüche

1. Messvorrichtung zur Durchflussbestimmung eines strömenden Mediums durch einen Kanal (1), wobei ein Messwertaufnehmer (2) dem strömenden Medium in dem Kanal (1) ausgesetzt ist und Anströmöffnungen (7), die dem strömenden Medium entgegengesetzt geöffnet sind, und Abströmöffnungen (8) aufweist, die in Fliessrichtung (X) des strömenden Mediums geöffnet sind, wobei sich Anströmöffnungen (7) und Abströmöffnungen (8) in einem Messwertaufnehmer (2.1 - 2.4) getrennt durch eine Scheidewand (11) befinden und über ein Druckentnahmeteil (5) mit einer Messeinheit verbunden sind, wobei mehrere Messwerteinheiten (2.1 bis 2.4) über einen Knoten (18) zu einem Messaufnehmer verbunden sind und nur ein Druckentnahmeteil (5) an eine Messwerteinheit (4.2) anschliesst und wobei der Messaufnehmer (2) beidseits von den Anströmöffnungen (7) bzw. Abströmöffnungen (8) eine Abbrisskante (16) aufweist, welche in einem gerundeten Radius (R) scheitelförmig gekrümmt ist,
**dadurch gekennzeichnet,**
**dass** zwischen einer Anströmfläche (12) mit den Anströmöffnungen (7) und der Abrisskante (16) auf eine entgegengesetzt S-förmige Krümmung (14) und auf diese bis zur Abrisskante (16) eine S-förmige Krümmung und auf die Abrisskante (16) ein einem S entgegengesetzt verlaufender Abstieg (17) folgt, der dann wiederum in eine S-förmige Krümmung zu einer Abströmfläche (13) mit den Abströmöffnungen (8) hin übergeht und sowohl Anstiege (15) als auch Abstiege (17) endwärtig in jeweils weitere Radien übergehen, in denen sich die Anströmöffnungen (7) bzw. die Abströmöffnungen (8) befinden.

2. Vorrichtung nach Anspruch 1, **dadurch gekennzeichnet, dass** Wirkdruckkanäle (9,10) zwischen den Anströmöffnungen (7) bzw. Abströmöffnungen (8) und dem Druckentnahmeteil (5) identisch in dem Messaufnehmer ausgebildet sind.

3. Vorrichtung nach Anspruch 1 oder 2, **dadurch gekennzeichnet, dass** die Messwerteinheiten (2.1 - 2.4) einstückig aus Metall oder Kunststoff geformt sind.

## Claims

1. Measuring device for determining the flow rate of a flowing medium through a channel (1), wherein a measuring sensor (2) is exposed to the flowing medium in the channel (1) and comprises inflow openings (7) which are open opposite to the direction of flow of the medium and outflow openings (8) which are open in the direction of flow (X) of the medium, wherein the inflow openings (7) and the outflow openings (8) are located in a measuring sensor (2.1 - 2.4) separated by a partition wall (11) and are connected via a pressure extraction part (5) to a measuring unit, wherein several measuring units (2.1 - 2.4) are connected via a node (18) to form a measuring sensor, and wherein only one pressure extraction part (5) is connected to one measuring unit (2.4), and wherein the measuring sensor (2) has, on both sides of the inflow openings (7) and the outflow openings (8), a tear-off edge (16) which is curved in a rounded radius (R) in the form of an apex,
**characterized in that**
between an inflow surface (12) with the inflow openings (7) and the tear-off edge (16), there follows an oppositely S-shaped curvature (14), followed by an S-shaped curvature up to the tear-off edge (16), and adjoining the tear-off edge (16) an oppositely directed descent (17), which in turn merges into an S-shaped curvature towards an outflow surface (13) with the outflow openings (8), and both ascents (15) and descents (17) merge at their ends into respective further radii in which the inflow openings (7) and the outflow openings (8) are located.

2. Device according to claim 1, **characterized in that** differential pressure channels (9, 10) between the inflow openings (7) and the outflow openings (8) and the pressure extraction part (5) are formed identically in the measuring sensor.

3. Device according to claim 1 or 2, **characterized in that** the measuring units (2.1 - 2.4) are integrally formed from metal or plastic.

## Revendications

1. Dispositif de mesure pour déterminer le débit d'un fluide en écoulement à travers un canal (1), dans lequel
un capteur de mesure (2) est soumis au fluide en écoulement dans le canal (1) et présente des orifices d'admission (7), ouverts dans le sens opposé au fluide en écoulement, et des orifices d'évacuation (8) ouverts dans le sens d'écoulement (X) du fluide en écoulement,
les orifices d'admission (7) et les orifices d'évacuation (8) se trouvent dans un capteur de mesure (2.1 à 2.4) en étant séparés par une cloison de séparation (11) et sont reliés à une unité de mesure par l'intermédiaire d'un élément de prélèvement de pression (5),
plusieurs unités de mesure (2.1 à 2.4) sont reliées par l'intermédiaire d'un nœud (18) pour former un capteur de mesure, et un seul élément de prélèvement de pression (5) est raccordé à une unité de mesure (4.2), et
le capteur de mesure (2) présente, de part et d'autre des orifices d'admission (7) ou des orifices d'évacuation (8), un bord de rupture (16) qui est courbé en forme de crête au niveau d'un rayon de courbure (R),
**caractérisé en ce qu'**entre une surface d'admission (12), munie des orifices d'admission (7), et le bord de rupture (16), une courbure en forme de S inversée (14) est suivie d'une courbure en forme de S jusqu'au bord de rupture (16), et le bord de rupture (16) est suivi d'une descente (17) s'étendant en sens inverse d'une forme en S, laquelle se prolonge à son tour par une courbure en forme de S jusqu'à une surface d'évacuation (13) munie des orifices d'évacuation (8), et aussi bien les montées (15) que les descentes (17) se prolongent, à leur extrémité, par d'autres rayons respectifs au niveau desquels se trouvent respectivement les orifices d'admission (7) et les orifices d'évacuation (8).

2. Dispositif selon la revendication 1,
**caractérisé en ce que** des canaux de pression active (9, 10) entre les orifices d'admission (7) ou les orifices d'évacuation (8) et l'élément de prélèvement de pression (5) sont formés de manière identique dans le capteur de mesure.

3. Dispositif selon la revendication 1 ou 2,
**caractérisé en ce que** les unités de mesure (2.1 à 2.4) sont moulées d'une seule pièce en métal ou en matière plastique.
